# EUROPÄISCHE PATENTSCHRIFT

(11) **EP 0 933 967 B1**
(45) Veröffentlichungstag und Bekanntmachung des Hinweises auf die Patenterteilung: **07.12.2005**
(21) Anmeldenummer: 99100739.4
(22) Anmeldetag: 15.01.1999
(51) Int. Cl.: H04Q 11/04

(54) **Verfahren und Zugriffs-Steuereinheit zur Steuerung von Zugriffen auf Ressourcen eines Kommunikationsnetzes**
Method and access control unit to control the access to the resources of a communication network
Méthode et unité de contrôle d'accès pour contrôler l'accès aux ressources d' un réseau de communication

(30) Priorität: 30.01.1998 DE 19803758
(43) Veröffentlichungstag der Anmeldung: 04.08.1999
(73) Patentinhaber: SIEMENS AKTIENGESELLSCHAFT, 80333 München (DE)
(72) Erfinder: Glade, Martin Dr., 53115 Bonn (DE)

(56) Entgegenhaltungen:
- EP-A- 0 596 624
- YASUSHI TAKAGI ET AL: "PRIORITY ASSIGNMENT CONTROL OF ATM LINE BUFFERS WITH MULTIPLE QOS CLASSES" IEEE JOURNAL ON SELECTED AREAS IN COMMUNICATIONS, IEEE INC. NEW YORK, US, Bd. 9, Nr. 7, 1. September 1991 (1991-09-01), Seiten 1078-1092, XP000272781 ISSN: 0733-8716
- BRIEM U ET AL: "TRAFFIC CONTROL FOR AN ATM SWITCH WITH PER VC QUEUING: CONCEPT AND IMPLEMENTATION" ISS '97. WORLD TELECOMMUNICATIONS CONGRESS. (INTERNATIONAL SWITCHING SYMPOSIUM). GLOBAL NETWORK EVOLUTION: CONVERGENCE OR COLLISION? TORONTO, SEPT. 21 - 26, 1997, ISS. WORLD TELECOMMUNICATIONS CONGRESS. (INTERNATIONAL SWITCHING SYMPOSIUM), TORONTO, P, Bd. 1, 21. September 1997 (1997-09-21), Seiten 409-415, XP000720546

## Beschreibung

In aktuellen nach dem Asynchronen Transfer Modus - ATM - konzipierten Kommunikationsnetzen, insbesondere in Teilnehmer-Anschlußnetzen oder Teilnehmer-Zugangsnetzen - z.B. als Passive Optical Networks PON oder als Fiber Coax Networks ausgestaltete Teilnehmer-Anschlußnetze, auch als ACCESS-Networks bezeichnet - wird die zur Verfügung stehende Datenübertragungsrate bzw. werden die zu der Verfügung stehenden Ressourcen des Kommunikationsnetzes auf an das Kommunikationsnetz angeschlossene Netzabschlußeinheiten bzw. auf die mit den Netzabschlußeinheiten verbundenen Kommunikationsendgeräte aufgeteilt. Der Zugriff der Netzabschlußeinheiten bzw. der Kommunikationsendgeräte auf das gemeinsam genutzte Übertragungsmedium - z.B. Lichtwellenleiter oder Funkkanal - wird durch einen bei hohen Übertragungsgeschwindigkeiten und bei einer Vielzahl von angeschlossenen Kommunikationsendgeräten üblicherweise durch Hardware realisierten Algorithmus gesteuert, durch welchen einer Kommunikationsnetz-Ressourcen anfordernden Netzabschlußeinheit die Zugriffsberechtigung bzw. der Zugriff auf das gemeinsam genutzte Übertragungsmedium erteilt wird. In der Druckschrift "NOVEL ALGORHITHM FOR TIME DEVISION MULTIPLE ACCESS IN BROADBAND ISDN PASSIV OPTICAL NETWORKS, International Journal of Digital and Analog Communication Systems, VOL. 6, Seite 55 bis 62 (1993), M. Glade und H. Keller" ist beispielsweise ein Verfahren zur Steuerung von Zugriffen von Netzabschlußeinheiten auf vorgegebene Ressourcen eines als passives optisches Kommunikationsnetz ausgestaltetes Teilnehmer-Anschlußnetz beschrieben. Gemäß dem offenbarten Verfahren ist in einer zentral im Teilnehmer-Anschlußnetz angeordneten und mit jeder Netzabschlußeinheit verbundenen Netzkontrolleinheit für jede Netzabschlußeinheit ein Timer bzw. Zähler realisiert, welche im Rahmen von den Netzabschlußeinheiten abgeleiteten Verbindungsaufbauten gestartet werden. Ein Timer läuft dann ab, bzw. der Zähler erreicht dann einen vorbestimmten Wert, sobald in einer betroffenen Netzabschlußeinheit ein neues Datenpaket bzw. ein speziell reservierter Speicherbereich mit Nutzdaten gefüllt und zur Datenübertragung in einem ebenfalls in der Netzabschlußeinheit realisierten Pufferspeicher zwischengespeichert ist. Die Dimensionierung der in der Netzkontrolleinheit angeordneten Zähler, bzw. die Dimensionierung der Zeit bis zum Ablaufen eines Timers erfolgt in Abhängigkeit von dem jeweils während den Verbindungsaufbauten festgelegten bzw. reservierten Datenübertragungsraten. Ein das Ablaufen eines Timers anzeigendes Signalisierungssignal stellt eine Netzabschlußeinheit-individuelle Anforderung auf eine Sendeberechtigung bzw. einen Zugriff auf das gemeinsam genutzte Übertragungsmedium dar, welche sequentiell in einem in der Netzkontrolleinheit realisierten, von allen an die Netzkontrolleinheit angeschlossenen Netzabschlußeinheiten gemeinsam genutzten Speicher - z.B. FIFO-Speicher - gespeichert wird. Aus diesem werden die gespeicherten Zugriffsanforderungen ausgelesen und als tatsächliche Sendeberechtigung an die angeschlossenen Netzabschlußeinheiten bzw. Kommunikationsendgeräte übermittelt, wodurch der Zugriff auf das gemeinsam genutzte Übertragungsmedium erteilt wird. Bei dem beschriebenen Verfahren können beispielsweise zwei Timer zur gleichen Zeit ablaufen, d.h. zwei zeitgleiche Zugriffsanforderungen müßten gespeichert und gesteuert werden. Da jedoch zwei zeitgleiche Zugriffe nicht möglich sind, wird eine der beiden Zugriffsanforderungen so lange verzögert, bis der aktuelle Zugriff der anderen Zugriffsanforderung abgeschlossen ist. Diese Verzögerung wird als "Cell Delay Varation" bezeichnet. Bei Ablauf von mehreren Timern zur gleichen Zeit, wird der Wert der "Cell Delay Variation" entsprechend erhöht.

Des weiteren ist bereits vorgeschlagen worden, daß die von den Netzabschlußeinheiten angeforderten Zugriffsberechtigungen auf das gemeinsam benutzte Übertragungsmedium direkt durch eine zentrale Steuereinheit erfaßt und gespeichert werden und damit die angeforderten Zugriffe auf das gemeinsam genutzte Übertragungsmedium gleichmäßig verteilt werden.

Des weiteren sind aus der nach dem Asynchronen-Transfer-Modus - ATM - konzipierten Kommunikationstechnik mehrere vom ATM-Forum definierte Verkehrstypen bzw. Dienstangebote bekannt, wobei durch die Verkehrstypen hochbitratige Datenübertragungen mit verschiedenen Anforderungen an beispielsweise Bandbreite und Verzögerungen unterstützt, bzw. bereitgestellt werden - vgl. "ATM & ATM-Management: die Basis für das B-ISDN der Zukunft; LAN-Kopplung über ATM WAN", Rüdiger Sellin, Berlin, Offenbach: VDE-Verlag, 1997, Seite 282-284. Beispielsweise können Sprache, Bilder und Daten über eine Art Zellen-Multiplexverfahren über die selben Anschlüsse übertragen werden. Die Dienstqualität - auch als Quality of Service (QoS) bezeichnet - der einzelnen Verkehrstypen und einige Verkehrsparameter werden vor dem Verbindungsaufbau im Rahmen der CAC - Connection Admission Control - verhandelt und in einem sogenannten Verkehrsvertrag festgelegt. Folgende Verkehrstypen bzw. Dienstangebote sind durch das ATM-Forum definiert:
- "konstante Bitrate", "Constant Bitrate" (CBR),
- "variable Bitrate", "Variable Bitrate" (VBR),
- "nicht festgelegte Bitrate", "Unspecified Bitrate" (UBR),
- "verfügbare Bitrate", "Available Bitrate" (ABR)

Die Verkehrstypen CBR und VBR sind insbesondere für Anwendungen mit hohen QoS-Anforderungen wie beispielsweise Multimediadienste oder Videokonferenzschaltungen mit qualitativ hochwertiger Bildübertragung geeignet. Bei CBR- und VBR-Diensten stellt die Bandbreite einen wichtigen Verkehrsparameter dar, welcher durch die Angabe einer Spitzen-Zellrate - Peak Cell Rate - charakterisiert ist und während der gesamten Verbindungsdauer bereitgestellt sein muß.

Beim Verkehrstyp VBR werden zusätzlich zur Spitzen-Zellrate die weiteren Verkehrsparameter "maximale Durchsatzrate" und "maximale Zellen-Übertragungsrate" (in Zellen pro Sekunde) bei der Einrichtung der Verbindung berücksichtigt. Die "maximale Durchsatzrate" begrenzt die Übertragungsdauer einer ATM-Zelle auf die Spitzen-Zellrate.

Der Verkehrstyp UBR ist ein Dienst, bei dem im Gegensatz zu CBR und VBR keine feste Bandbreite reserviert und auch keine Zellverlustrate festgelegt ist. Für eine aufzubauende bzw. gewünschte UBR-Verbindung muß somit durch das Netzwerk keine Ressourcen bereitgestellt werden.

Der Verkehrstyp ABR stellt eine Mischung aus reservierte Bandbreite - wie beispielsweise bei CBR und VBR - und nicht reservierte Bandbreite - wie bei UBR - dar.

In EP 0596 624 ist ein Verfahren zur Zuteilung von Übertragungsressourcen innerhalb von gemäß dem Asynchronen Transfer Modus ausgestalteten Kommunikationsnetzen offenbart. Über mehrere ATM-Netzwerkknoten sind ein oder mehrere virtuelle ATM-Verbindungen geführt, wobei im Rahmen dieser virtuellen Verbindungen über eine der Eingangsleitungen zugeführte ATM-Zellen nach einem statistischen Multiplexerprinzip an eine entsprechende Ausgangsleitung weitergeleitet werden. Jede Ausgangsleitung eines Netzwerkknotens weist einen Warteschlangenmechanismus auf, durch welchen ATM-Zellen empfangen und für die Weitervermittlung gespeichert werden.

In Yasushi Takagi et al: "Priority assignment control of ATM line buffers with multiple QoS classes", IEEE Journal on Selected Areas In Communications, IEEE Inc. New Yourk, US Bd, 9, Nr. 7, 1. September 1991 (1991-09-01), Seiten 1078-1092 ist ebenfalls ein in einem ATM-Netzwerkknoten angeordnetes Ressourcen-Zuteilungsverfahren beschrieben, welches die Weitervermittlung von ATM-Zellen jeweils auf genau einer Ausgangsleitung des Netrzwerkknotens steuert.

Der Erfindung liegt die Aufgabe zugrunde, zeitmultiplex-orientierte Kommunikationsnetze, insbesondere zeitmultiplex-orientierte Teilnehmer-Zugangsnetze für den Einsatz aktueller Verkehrstypen bzw. Dienste - beispielsweise für den Einsatz von Multimedia-Anwendungen zu erweitern. Die Aufgabe wird ausgehend von einem Verfahren und einer Zugriffs-Steuereinheit gemäß den Merkmalen des Oberbegriffs der Patentansprüche 1 und 8 durch die jeweils kennzeichnenden Merkmale gelöst.

Beim erfindungsgemäßen Verfahrens zur Steuerung von Zugriffen auf Ressourcen eines von mehreren Netzabschlusseinheiten zur Informationsübermittlung gemeinsam genutzten Übertragungsmediums, welches an ein übergeordnetes Kommunikationsnetz anschließbar ist, werden den Netzabschlusseinheiten zeitmultiplex-orientierte Teil-Ressourcen mit zumindest einem Kriterium zugeteilt. Der wesentliche Aspekt des erfindungsgemäßen Verfahrens besteht darin, dass für jedes Kriterium eine Warteschlange vorgesehen ist, welche zentral dem gemeinsam genutzten Übertragungsmedium zugeordnet ist. Zugriffsberechtigungen der Netzabschlusseinheiten auf das gemeinsame übertragungsmedium werden zentral in Abhängigkeit von dem zumindest einem Kriterium der jeweils zugeteilten Teil-Ressourcen erzeugt und der entsprechenden Warteschlange mit dem entsprechenden Warteschlangen-individuellen Kriterium zugeordnet. Durch zyklische Abarbeitung der Warteschlangen wird der Zugriff auf die entsprechenden Teil-Ressourcen gemäß den zugeordneten Zugriffsberechtigungen erteilt.

Der wesentliche Vorteil des erfindungsgemäßen Verfahrens besteht darin, daß in bestehenden oder zu installierenden Kommunikationsnetzen und insbesondere in den darin angeordneten Teilnehmer-Zugangsnetzen - auch als "ACCESS-Networks" bezeichnet - aktuelle, insbesondere Breitband-orientierte Datendienste wie beispielsweise zeitkritische Multimedia-Dienste realisierbar sind. Warteschlangen sind kostengünstig durch festlegbare Speicherbereiche in einem im Kommunikationsnetz angeordneten Speicher realisierbar, wobei für beliebig viele Kriterien entsprechende Speicherbereiche definierbar sind, in denen Zugriffsanforderungen von Netzabschlußeinheiten auf Teil-Ressourcen des Kommunikationsnetzes speicherbar sind. Abhängig von dem speicherbereich-individuellen Kriterien werden die in den einzelnen Speicherbereichen gespeicherten Zugriffsanforderungen ausgelesen und entsprechend den jeweiligen Netzabschlußeinheiten der Zugriff auf das gemeinsam genutzte Übertragungsmedium erteilt. Vorteilhaft können durch das erfindungsgemäße Verfahren auf unterschiedlichen Verkehrstypen basierende - d.h. unterschiedliche Übertragungsraten und Bearbeitungsprioritäten beanspruchende - Datendienste kostengünstig mit Hilfe eines von mehreren Netzabschlußeinheiten gemeinsam genutzten Übertragungsmediums realisiert und angeboten werden. Durch die vorteilhafte Realisierung unterschiedlicher Breitband-orientierter Datendienste in Teilnehmer-Zugangsnetzen und durch die damit verbundene kostenoptimale Integration verschiedener Dienstetypen finden moderne Informationsdienste wie beispielsweise Video-on-Demand rasche Verbreitung und eine hohe Nutzerakzeptanz.

Gemäß einer vorteilhaften Ausgestaltung stellt ein Kriterium die Priorität von mit Hilfe der Ressourcen zu übermittelnder Informationen dar - z.B. zeitkritische Sprach- oder Videodienste mit hoher Priorität oder eine niedrige Priorität aufweisende Datenübertragungsdienste. Für jede Priorität ist eine Warteschlange vorgesehen, zu welchen die Zugriffsanforderungen auf die Teil-Ressourcen in Abhängigkeit von der Priorität der zu übermittelnder Informationen zugeordnet werden. Durch Auslesen der Zugriffsanforderungen aus den einzelnen Warteschlangen wird in Abhängigkeit von den zugeordneten, prioritätsspezifischen Zugriffsanforderungen den Netzabschlußeinheiten der Zugriff auf die Teil-Ressourcen erteilt - Anspruch 3.

Vorteilhaft werden zuerst die Warteschlangen mit der höchsten Priorität abgearbeitet - Anspruch 4.

Beispielsweise ist die Priorität durch mit Hilfe der übertragungs- und vermittlungstechnischen Eigenschaften der Ressourcen zu realisierender Dienste oder Dienstklassen bestimmt - Anspruch 5. Bei Ausgestaltung des Kommunikationsnetzes durch einen nach dem Asynchronen-Transfer-Modus - ATM-konzipiertes Kommunikationsnetz - Anspruch 6 - ist vorteilhaft die Priorität durch die Eigenschaften von gemäß dem ATM-Forum festgelegten Verkehrstypen oder Dienstangeboten bestimmt - Anspruch 7. Durch diese vorteilhafte Ausgestaltung sind Informations- bzw. Datendienste mit folgenden, bereits durch das ATM-Forum definierten Verkehrstypen oder Dienstangeboten realisierbar:
- "konstante Bitrate", "Constant Bitrate" (CBR),
- "variable Bitrate", "Variable Bitrate" (VBR),
- "nicht festgelegte Bitrate", "Unspecifite Bitrate" (UBR), sowie
- "verfügbare Bitrate", "Available Bitrate" (ABR)

Weitere vorteilhafte Ausgestaltungen des erfindungsgemäßen Verfahrens sind den weiteren Ansprüchen zu entnehmen.

Im folgenden wird das erfindungsgemäße Verfahren zur Steuerung von Zugriffen von Netzabschlußeinheiten auf Ressourcen eines Kommunikationsnetzes anhand eines Blockschaltbildes näher erläutert. Das Blockschaltbild zeigt eine Netzkontrolleinheit OLT, welche über vorgegebene Ressourcen vr mit einem übergeordneten Kommunikationsnetz OKN verbunden ist. In diesem Ausführungsbeispiel ist das übergeordnete Kommunikationsnetz OKN durch ein nach dem Asynchronen-Transfer-Modus - ATM - konzipiertes Kommunikationsnetz realisiert. Die vorgegebenen Ressourcen vr sind beispielsweise durch eine Lichtwellenleiter-Übertragung mit einer Datenübertragungsrate von 155 MBit/s realisiert, wobei die Netzkontrolleinheit OLT beispielsweise über einen einzelnen Lichtwellenleiter LWL an das nach dem ATM-konzipierte Kommunikationsnetz OKN angeschlossen ist. An die Netzkontrolleinheit OLT sind über ein Teilnehmer-Anschlußnetz TAN realisierende Anschlußleitungen VL1...n mehrere Netzabschlußeinheiten NT1...n angeschlossen. Das Teilnehmer-Anschlußnetz TAN stellt ein von allen Netzabschlußeinheiten NT1...n gemeinsam genutztes Übertragungsmedium dar, welches in diesem Ausführungsbeispiel als auf einen Lichtwellenleiter als Übertragungsmedium basierendes, passives, optisches Netzwerk - auch als PON bezeichnet - ausgestaltet ist. Die Netzkontrolleinheit OLT und das Teilnehmer-Anschlußnetz TAN bilden das Teilnehmer-Zugangsnetz ACCESS für das ATM-orientierte, übergeordnete Kommunikationsnetz OKN. Jede Netzabschlußeinheit NT1...n ist mit zumindest einem Kommunikationsendgerät KE verbindbar, wobei in diesem Ausführungsbeispiel ein erstes Kommunikationsendgerät KE1 mit der ersten Netzabschlußeinheit NT1 und ein zweites Kommunikationsendgerät KE2 mit der zweiten Netzabschlußeinheit NT2 verbunden ist. Das erste Kommunikationsendegerät KE1 repräsentiert beispielsweise einen Personalcomputer, auf welchem ein Prozeß aktiv ist, über den paketorientierte Nutzdaten von dem ersten Kommunikationsendgerät KE1 an das übergeordnete, ATM-orientierte Kommunikationsnetz OKN übermittelt werden sollen. Dazu wird gemäß paketorientierter Verbindungsprotokolle - beispielsweise gemäß den Internet-orientierten TCP/IP-Protokollen - eine entsprechende Verbindungsaufbau-Meldung von dem ersten Kommunikationsendgerät KE1 an die erste Netzabschlußeinheit NT1 übermittelt. Von der ersten Netzabschlußeinheit NT1 wird ein protokollgemäßer Verbindungsaufbau zur Netzkontrolleinheit OLT und damit zum übergeordneten, ATM-orientierten Kommunikationsnetz OKN eingeleitet. Im Rahmen des Verbindungsaufbaus wird beispielsweise für das der ersten Netzabschlußeinheit NT1 zugeordnete erste Kommunikationsendgerät KE1 eine Ubertragungsressource tr1 bzw. eine bidirektionale Verbindung zur Realisierung eines verbindungslosen Datentransfers bei variablen Bitraten zugeordnet. Diese entspricht der AAL-Dienstklasse D - auch als AAL-Service-Class bezeichnet -, bzw. entspricht dem vom ATM-Forum klassifizierten Verkehrstyp UBR, welcher bei ungesicherten Datentransfer - z.B. Internetprotokolle wie IP über ATM oder LAN-zu-LAN-Kopplungen über ATM-WAN als Kommunikations-Backbone - oder bei LAN-Emulationen eingesetzt wird. In diesem Ausführungsbeispiel erfolgt der Transport der IP-Datenpakete beispielsweise mit einer mittleren Datenübertragungsrate von 64 KBit/s über das Teilnehmeranschlußnetz TAN.

Des Weiteren stellt das mit der zweiten Netzabschlußeinheit NT2 verbundene, zweite Kommunikationsendgerät KE2 beispielsweise ein Multimedia-Kommunikationsendgerät - z.B. eine Set-Top-Box oder ein Personalcomputer mit aktivem Prozeß zur Verarbeitung von Video- und/oder Audio-Daten - dar. Zur Übertragung von zeitkritischen Video- und/oder Audio-Daten wird vom zweiten Kommunikationsendgerät KE2 eine weitere Verbindungsaufbau-Anforderung an die Netzkontrolleinheit OLT übermittelt. Im Rahmen des Verbindungsaufbaus wird dem zweiten Kommunikationsendgerät KE2 eine Übertragungsressource tr2 bzw. eine bidirektionale Verbindung zur Realisierung von Diensten mit synchroner Datenübertragung bei variablen Bitraten zugeordnet. Dies entspricht der AAL-Dienstklasse B bzw. dem vom ATM-Forum klassifizierten Verkehrstyp VBR, welcher zur Übertragung von Bewegtbildern hoher Bildqualität wie z.B. in Multimediadiensten oder in interaktiven Diensten - wie "Video-on-Demand", interaktives Lernen, Übermitteln von Patientenunterlage inklusive hochauflösender Röntgenbilder - eingesetzt wird. In diesem Ausführungsbeispiel wird der zweiten Netzabschlußeinheit NT2 eine Übertragungsressource von 2 MBit/s zugeordnet.

In der Netzkontrolleinheit OLT ist eine die Zugriffe der Netzabschlußeinheiten NT1...n auf das Teilnehmer-Zugangsnetz ACCESS bzw. auf das zeitmultiplex-orientierte Teilnehmeranschlußnetz TAN steuernde Zugriffs-Steuereinheit ZSE angeordnet, welche mit einem flüchtigen Speicher RAM verbunden ist. Die vom ersten Kommunikationsendgerät KE1 an die erste Netzabschlußeinheit NT1 übermittelten paketorientierten Daten sowie die vom zweiten Kommunikationsendgerät KE2 an die zweite Netzabschlußeinheit NT2 übermittelten, zeitkritischen Audio- und/oder Video-Daten werden jeweils in einem in der Netzabschlußeinheit NT1...n angeordneten Zwischenspeicher - nicht dargestellt - zwischengespeichert. Um eine Datenübertragung entsprechend der protokollmäßig vereinbarten Übertragungsraten bzw. Dienstklassen zu gewährleisten - beispielsweise Echtzeit-gemäße Übertragung der zeitkritischen Audio- und/oder Video-Daten von der zweiten Netzabschlußeinheit NT2 an das übergeordnete Kommunikationsnetz OKN - sowie um eine Überlaufen der in den Netzabschlußeinheiten NT1...n angeordneten Zwischenspeicher zu verhindern, muß durch die in der Netzkontrolleinheit OLT angeordnete Zugriffs-Steuereinheit ZSE den einzelnen Netzabschlußeinheiten NT1...n in regelmäßigen Zeitabständen entsprechend der Zugriff auf die vorgegebenen, von allen Netzabschlußeinheiten NT1...n gemeinsam genutzten Ressourcen vr des Teilnehmer-Zugangsnetzes ACCESS bzw. des Teilnehmer-Anschlußnetzes TAN zugeteilt werden, um ein Übermitteln der in den Zwischenspeichern der Netzabschlußeinheiten NT1...n gespeicherten Daten an die Netzkontrolleinheit OLT sowie über den Lichtwellenleiter LWL an das übergeordnete, ATM-orientierte Kommunikationsnetz OKN zu ermöglichen.

Zur Realisierung des erfindungsgemäßen Verfahrens zur Steuerung der Zugriffe auf das zeitmultiplex-orientierte Teilnehmeranschlußnetz TAN bzw. zur Steuerung von Zugriffen auf die vorgegebenen Ressourcen vr des Lichtwellenleiters LWL sind in dem in der Netzkontrolleinheit OLT angeordnetem Speicher RAM drei Speicherbereiche CBR, VBR, UBR definiert bzw. reserviert. Die drei Speicherbereiche CBR, VBR, UBR stellen jeweils Warteschlangen dar, in welche die Zugriffsanforderungen der einzelnen Netzabschlußeinheiten NT1...n in Abhängigkeit von den übertragungs- und vermittlungstechnischen Eigenschaften - z.B. Dienstklasse oder Verkehrstyp - der den einzelnen Netzabschlußeinheiten NT1...n zugeordneten Verbindungen bzw. übertragungsressourcen gespeichert werden. In der ersten Warteschlange CBR werden Zugriffsanforderungen von Netzabschlußeinheiten NT1...n gespeichert, welche Verbindungen gemäß dem vom ATM-Forum definierten Verkehrstyp "Constant Bit Rate" bzw. Dienste gemäß der definierten Dienstklasse A steuert. Entsprechend werden in der zweiten Warteschlange VBR Zugriffsanforderungen vom Verkehrstyp "Variable Bit Rate", bzw. der Dienstklasse B und in der dritten Warteschlange UBR Zugriffsanforderungen vom Verkehrstyp "Unspecified Bit Rate", bzw. der Dienstklasse D gespeichert, wobei die erste Warteschlange CBR gemäß der zugeordneten Verkehrstyp-Eigenschaften die höchste Priorität, die zweite Warteschlange VBR die zweithöchste Priorität und die dritte Warteschlange die niedrigste Priorität aufweist. Die Zugriffsanforderungen werden durch bekannte und in der Beschreibungseinleitung beschriebene Prozesse - z.B. Erzeugen von Signalisierungssignalen durch Timer oder Zähler mit bestimmten Zählwerten - gebildet. Beispielsweise werden in der Netzkontrolleinheit OLT dann Zugriffsberechtigungen zb1, zb2 durch nicht dargestellte Timer für die erste und zweite Netzkontrolleinheit NT1, NT2 erzeugt, wenn an die Zwischenspeicher der ersten und zweiten Netzabschlußeinheit NT1,2 jeweils ein Nutzdatenvolumen von 48 Byte - oder einem Vielfachem davon - vom ersten bzw. zweiten Kommunikationsendgerät KE1,2 übermittelt wurde und als Nutzdaten in eine ATM-Zelle eingefügt sind. Beispielsweise wird im Rahmen der von der ersten Netzabschlußeinheit NT1 gesteuerten 64 KBit/s-Verbindung alle 6 ms eine fertige ATM-Zelle - d.h. mit ein Nutzdatenvolumen von 48 Byte - im Zwischenspeicher der ersten Netzabschlußeinheit NT1 gespeichert und entsprechend alle 6 ms eine Zugriffsanforderung zb1 in der Netzkontrolleinheit OLT gebildet. Die Zugriffsanforderung zb1 wird entsprechend dem Verkehrstyp der Verbindung - "Unspecified Bit Rate" - in der dritten Warteschlange UBR gespeichert.

Im Rahmen der von der zweiten Netzabschlußeinheit NT2 gesteuerten 2 MBit/s Verbindung wird alle 187,5 µs eine Zugriffsanforderung zb2 gebildet und in der zweiten Warteschlage VBR entsprechend dem Verkehrstyp "Variable Bit Rate" gespeichert. Zur Steuerung der von den Netzabschlußeinheiten NT1,2 angeforderten Zugriffe werden die drei Warteschlangen CBR,VBR,UBR durch die in der Netzkontrolleinheit angeordneten Zugriffs-Steuereinheit ZSE abgearbeitet, wobei zuerst die Warteschlange mit der höchsten Priorität - d.h. die erste Warteschlange CBR -, anschließend die Warteschlange mit der zweithöchsten Priorität - d.h. die zweite Warteschlange VBR - und anschließend die Warteschlange mit der niedrigsten Priorität - d.h. die dritte Warteschlange UBR - ausgelesen wird. Da gemäß dem Ausführungsbeispiel in der ersten Warteschlange CBR keine Zugriffsanforderungen gespeichert sind, werden zuerst die in der zweiten Warteschlange VBR mit der zweithöchsten Priorität gespeicherten Zugriffsanforderungen zb2 ausgelesen und somit der zweiten Netzabschlußeinheit NT2 bzw. dem zweiten Kommunikationsendgerät KE2 innerhalb der durch die zugeordnete Dienstklasse festgelegten und garantierten Zeit-Verzögerungstoleranzen der Zugriff auf das Übertragungsmedium für einen festgelegten Übertragungszeitraum zugeteilt. Nach Auslesen der zweiten Warteschlange VBR werden die in der dritten Warteschlange UBR mit der niedrigsten Priorität gespeicherten Zugriffsanforderungen zb1 ausgelesen und der ersten Netzabschlußeinheit NT1 bzw. dem ersten Kommunikationsendgerät KE1 entsprechend der zugeordneten Dienstklasse der Zugriff auf das Übertragungsmedium zugeteilt. Innerhalb des dem ersten Kommunikationsendgerät KE1 zugeteilten Übertragungszeitraums werden die im Zwischenspeicher der ersten Netzabschlußeinheit NT1 gespeicherten Daten, bzw. ATM-Zellen an die Netzkontrolleinheit OLT und von dieser über den Lichtwellenleiter LWL an das übergeordnete Kommunikationsnetz OKN übermittelt.

Während des Abarbeitens der dritten Warteschlange UBR können beispielsweise weitere Zugriffsanforderungen zb2 zur Steuerung der der zweiten Netzabschlußeinheit NT2 zugeordneten Ressource bzw. bidirektionalen Verbindung vom Verkehrstyp VBR in der Netzkontrolleinheit OLT erzeugt werden, welche entsprechend in der zweiten Warteschlange VBR gespeichert werden. Auf Grund der zugeordneten höheren Priorität wird anschließend die zweite Warteschlange VBR zur Abwicklung des von der zweiten Netzabschlußeinheit NT2 gesteuerten, höher priorisierten Verkehrs abgearbeitet.

Durch das beschriebene Verfahren wird ein Zeitschlitzzuteilungsverfahren realisiert, welches vorteilhaft die in der aktuellen Breitbandtechnik angewandte Unterscheidung in Verkehrsklassen bzw. Verkehrstypen, - d.h. der wichtigste Datenverkehr verdrängt den unwichtigeren - mit der Strategie der gemeinsamen Warteschlange für Reservierungen von Zugriffen auf ein gemeinsam genutztes Übertragungsmedium verbindet.

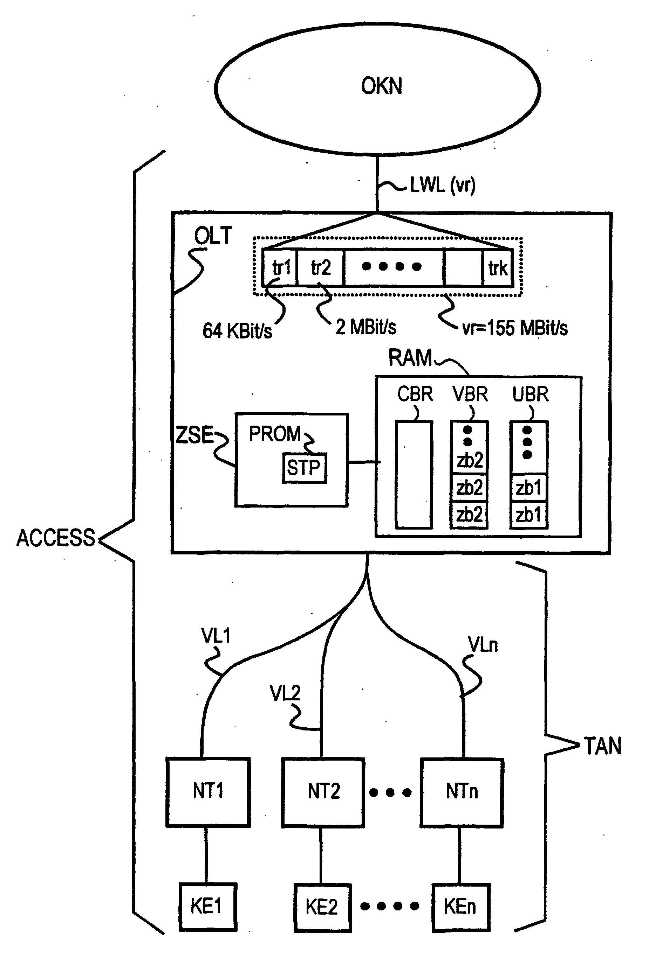

## Patentansprüche

1. Verfahren zur Steuerung von Zugriffen auf Ressourcen eines von mehreren Netzabschlusseinheiten (NT1...n) zur Informationsübermittlung gemeinsam genutzten Übertragungsmediums (VL1...n), welches die Netzabschlusseinheiten (NT1...n) mit einer Netzkontrolleinheit (OLT) verbindet,
bei dem den Netzabschlusseinheiten (NT1...n) zeitmultiplex-orientierte Teil-Ressourcen (tr1...k) mit zumindest einem Kriterium zugeteilt werden,
wobei
- für jedes Kriterium eine Warteschlange ((CBR, VBR, UBR) vorgesehen ist, welche zentral dem gemeinsam genutzten Übertragungsmedium (ACCESS, TAN) zugeordnet ist,
- Zugriffsberechtigungen (zb1, 2) der Netzabschlusseinheiten (NT1...n) auf das gemeinsame Übertragungsmedium (VL1...n) in Abhängigkeit von dem zumindest einem Kriterium der jeweils zugeteilten Teil-Ressourcen (tr1...k) zentral erzeugt und der entsprechenden Warteschlange (CBR, VBR, UBR) mit dem entsprechenden Warteschlangen-individuellen Kriterium zugeordnet werden,
- durch zyklische Abarbeitung der Warteschlangen (CBR, VBR, UBR) der Zugriff auf die entsprechenden Teil-Ressourcen (tr1...k) gemäß den zugeordneten Zugriffsberechtigungen (zb1,2) erteilt wird.

2. Verfahren nach Anspruch 1,
**dadurch gekennzeichnet,**
- **daß** die Reihenfolge der Abarbeitung der Warteschlangen (CBR, VBR, UBR) durch die Warteschlangen-individuellen Kriterien bestimmt ist, und
- **daß** nach dem Zugriff einer Netzabschlußeinheit (NT1...n) auf die Teil-Ressourcen (tr1...k) die entsprechende Zugriffsanforderung (zb1,2) aus der jeweiligen Warteschlange (CBR, VBR, UBR) entfernt wird.

3. Verfahren nach Anspruch 1 oder 2,
**dadurch gekennzeichnet**,
- **daß** ein Kriterium die Priorität von mit Hilfe der Ressourcen zu übermittelnder Informationen darstellt, wobei
-- für jede Priorität eine Warteschlange (CBR, VBR, UBR) vorgesehen ist, und
-- die Zugriffsanforderungen (zb1,2) auf die Teil-Ressourcen (tr1...k) in Abhängigkeit von der Priorität der zu übermittelnden Informationen der entsprechenden Warteschlange (CBR, VBR, UBR) zugeordnet werden,
- **daß** in Abhängigkeit von den zugeordneten, prioritätsspezifischen Zugriffsanforderungen (zb1,2) den Netzabschlußeinheiten (NT1...n) der Zugriff auf die Teil-Ressourcen (tr1...k) erteilt wird.

4. Verfahren nach Anspruch 3,
**dadurch gekennzeichnet,**
**daß** zuerst die Warteschlangen (CBR, VBR, UBR) mit der höchsten Priorität abgearbeitet werden.

5. Verfahren nach einem der vorherigen Ansprüche,
**dadurch gekennzeichnet,**
**daß** die Priorität durch mit Hilfe der übertragungs- und vermittlungstechnischen Eigenschaften der Ressourcen des gemeinsam genutzten Übertragungsmediums (VL1...n) zu realisierender Dienste oder Dienstklassen bestimmt ist.

6. Verfahren nach einem der vorherigen Ansprüche,
**dadurch gekennzeichnet,**
**daß** das Übertragungsmedium (VL1...n) durch ein nach dem Asynchronen Transfer Modus - ATM - konzipiertes Kommunikationsnetz realisiert ist.

7. Verfahren nach Anspruch 6,
**dadurch gekennzeichnet,**
**daß** die Priorität durch die Eigenschaften von gemäß dem ATM-Forum festgelegten Verkehrstypen oder Dienstangeboten bestimmter Dienstqualität bestimmt ist.

8. Verfahren nach einem der vorherigen Ansprüche,
**dadurch gekennzeichnet,**
**daß** die zeitmultiplex-orientierten Teil-Ressourcen (tr1...k) des Übertragungsmediums (VL1...n) durch Übertragungskanäle oder virtuelle Übertragungskanäle mit zugeordneter Übertragungsrate repräsentiert sind.

9. Zugriffs-Steuereinheit (ZSE) zur Steuerung von Zugriffen auf Ressourcen eines von mehreren Netzabschlusseinheiten (NT1...n) zur Informationsübermittlung gemeinsam genutzten Übertragungsmediums (VL1...n), welches die Netzabschlusseinheiten (NT1...n) mit einer Netzkontrolleinheit (OLT) verbindet, wobei durch die Zugriffs-Steuereinheit (ZSE) den Netzabschlusseinheiten (NT1...n) zeitmultiplex-orientierte Teil-Ressourcen (tr1...k) mit zumindest einem Kriterium zugeteilt werden,
und wobei
- für jedes Kriterium eine der zentralen Zugriffs-Steuereinheit (ZSE) zugeordnete Warteschlange ((CBR, VBR, UBR) vorgesehen ist,
- die Zugriffs-Steuereinheit derart ausgestaltet ist,
-- dass Zugriffsberechtigungen (zb1,2) der Netzabschlusseinheiten (NT1...n) auf das gemeinsame Übertragungsmedium (VL1...n) in Abhängigkeit von dem zumindest einem Kriterium der jeweils zugeteilten Teil-Ressourcen (tr1...k) zentral erzeugt und der entsprechenden Warteschlange (CBR, VBR, UBR) mit dem entsprechenden Warteschlangen-individuellen Kriterium zugeordnet werden,
-- dass durch zyklische Abarbeitung der Warteschlangen (CBR, VBR, UBR) der Zugriff auf die entsprechende Teil-Ressourcen (tr1...k) gemäß den zugeordneten Zugriffsberechtigungen (zb1,2) erteilt wird.

10. Verfahren nach Anspruch 9,
**dadurch gekennzeichnet,**
**daß** die Zugriffs-Steuereinheit (ZSE) der Netzkontrolleinheit (OLT) zugeordnet ist.

## Claims

1. Method for controlling access to resources of a transmission medium (VL1 ... n) used commonly by a number of network termination units (NT1 ... n) to transmit information, connecting the network termination units (NT1 ... n) to a network control unit (OLT),
with time-multiplex based sub-resources (tr1 ... k) with at least one criterion being allocated to the network termination units (NT1 ... n),
- with a queue (CBR, VBR, UBR) being provided for each criterion, which is assigned centrally to the commonly used transmission medium (ACCESS, TAN),
- with access authorisation (zb1, 2) to the common transmission medium (VL1 ... n) for the network termination units (NT1 ... n) being generated centrally as a function of the at least one criterion of the respectively allocated sub-resources (tr1 ... k) and being assigned to the corresponding queue (CBR, VBR, UBR) with the corresponding queue-specific criterion,
- with access to the corresponding sub-resources (tr1 ... k) being granted based on the assigned access authorisation (zb1, 2) by cyclical processing of the queues (CBR, VBR, UBR).

2. Method according to claim 1,
**characterised in that**
- the sequence for processing the queues (CBR, VBR, UBR) is defined by the queue-specific criteria and
- after access by a network termination unit (NT1 ... n) to the sub-resources (tr1 ... k), the corresponding access request (zb1, 2) is deleted from the respective queue (CBR, VBR, UBR).

3. Method according to claim 1 or 2,
**characterised in that**
- a criterion represents the priority of information to be transmitted with the aid of the resources, with
-- a queue (CBR, VBR, UBR) being provided for each priority and
-- access requests (ZB1, 2) for the sub-resources (tr1 ... k) being assigned to the corresponding queue (CBR, VBR, UBR) as a function of the priority of the information to be transmitted,
- access to the sub-resources (tr1 ... k) is granted to the network termination units (NT1 ... n) as a function of the assigned, priority-specific access requests (zb1, 2).

4. Method according to claim 3,
**characterised in that** the queues (CBR, VBR, UBR) with the highest priority are processed first.

5. Method according to one of the preceding claims,
**characterised in that** priority is defined by services or service classes to be implemented with the aid of the transmission and switching characteristics of the resources of the commonly used transmission medium (VL1 ... n) .

6. Method according to one of the preceding claims,
**characterised in that** the transmission medium (VL1 ... n) is implemented by a communication network designed on the basis of the asynchronous transfer mode ATM.

7. Method according to claim 6,
**characterised in that** priority is defined by the characteristics of service quality defined by traffic types or service offerings specified according to the ATM Forum.

8. Method according to one of the preceding claims,
**characterised in that** the time-multiplex based sub-resources (tr1 ... k) of the transmission medium (VL1 ... n) are represented by transmission channels or virtual transmission channels with assigned transmission rates.

9. Access control unit (ZSE) for controlling access to resources of a transmission medium (VL1 ... n) used commonly by a number of network termination units (NT1 ... n) to transmit information, connecting the network termination units (NT1 ... n) to a network control unit (OLT),
with time-multiplex based sub-resources (tr1 ... k) with at least one criterion being allocated by the access control unit (ZSE) to the network termination units (NT1 ... n),
- and with a queue (CBR, VBR, UBR) assigned to the central access control unit (ZSE) being provided for each criterion,
- with the access control unit being configured such that
-- access authorisation (zb1, 2) to the common transmission medium (VL1 ... n) for the network termination units (NT1 ... n) is generated centrally as a function of the at least one criterion of the respectively allocated sub-resources (tr1 ... k) and is assigned to the corresponding queue (CBR, VBR, UBR) with the corresponding queue-specific criterion,
- access to the corresponding sub-resources (tr1 ... k) is granted based on the assigned access authorisation (zb1, 2) by cyclical processing of the queues (CBR, VBR, UBR).

10. Method according to claim 9,
**characterised in that** the access control unit (ZSE) is assigned to the network control unit (OLT).

## Revendications

1. Méthode de contrôle d'accès à des ressources d'un médium de transmission (VL1 ... n) utilisé en commun par plusieurs unités terminales de réseau (NT1 ... n) pour la transmission d'informations, lequel médium relie les unités terminales de réseau (NT1 ... n) à une unité de contrôle de réseau (OLT), dans laquelle des ressources partielles (tr1 ... k) orientées multiplexage par répartition dans le temps avec au moins un critère sont attribuées aux unités terminales de réseau (NT1 ... n),
- une file d'attente (CBR, VBR, UBR) qui est affectée centralement au médium de transmission (ACCESS, TAN) utilisé en commun étant prévue pour chaque critère,
- des autorisations d'accès (zb1, 2) des unités terminales de réseau (NT1 .... n) au médium de transmission commun (VL1 ... n) étant générées centralement en fonction de l'au moins un critère des ressources partielles (tr1 ... k) respectivement attribuées, et affectées à la file d'attente (CBR, VBR, UBR) correspondante avec le critère correspondant individuel à la file d'attente,
- l'accès aux ressources partielles (tr1 ... k) correspondantes étant octroyé conformément aux autorisations d'accès (zb1, 2) associées par traitement cyclique des files d'attente (CBR, VBR, UBR).

2. Méthode selon la revendication 1,
**caractérisée en ce que**
- l'ordre du traitement des files d'attente (CBR, VBR, UBR) est déterminé par les critères individuels aux files d'attente et
- après l'accès d'une unité terminale de réseau (NT1 ... n) aux ressources partielles (tr1 ... k), la requête d'accès correspondante (zb1, 2) est retirée de la file d'attente respective (CBR, VBR, UBR).

3. Méthode selon la revendication 1 ou 2,
**caractérisée en ce que**
- un critère représente la priorité d'informations à transmettre à l'aide des ressources,
-- une file d'attente (CBR, VBR, UBR) étant prévue pour chaque priorité et
-- les requêtes d'accès (zb1, 2) aux ressources partielles (tr1 ... k) étant affectées à la file d'attente correspondante (CBR, VBR, UBR) en fonction de la priorité des informations à transmettre,
- l'accès aux ressources partielles (tr1 ... k) est octroyé aux unités terminales de réseau (NT1 ... n) en fonction des requêtes d'accès (zb1, 2) associées, spécifiques aux priorités.

4. Méthode selon la revendication 3,
**caractérisée en ce que**
les files d'attente (CBR, VBR, UBR) avec la priorité la plus élevée sont traitées en premier lieu.

5. Méthode selon l'une des revendications précédentes,
**caractérisée en ce que**
la priorité est déterminée par des services ou classes de service à réaliser à l'aide des caractéristiques des ressources du médium de transmission (VL1 ... n) utilisé en commun, relatives à la technique de transmission et de commutation.

6. Méthode selon l'une des revendications précédentes,
**caractérisée en ce que**
le médium de transmission (VL1 ... n) est réalisé par un réseau de communication conçu selon le mode de transfert asynchrone ATM.

7. Méthode selon la revendication 6
**caractérisée en ce que**
la priorité est déterminée par les caractéristiques de types de trafic ou d'offres de service de qualité de service déterminée, spécifiés selon le forum ATM.

8. Méthode selon l'une des revendications précédentes,
**caractérisée en ce que**
les ressources partielles (tr1 ... k) du médium de transmission (VL1 ... n) orientées multiplexage par répartition dans le temps sont représentées par des canaux de transmission ou des canaux de transmission virtuels avec un débit de transmission associé.

9. Unité de contrôle d'accès (ZSE) pour le contrôle d'accès à des ressources d'un médium de transmission (VL1 ... n) utilisé en commun par plusieurs unités terminales de réseau (NT1 ... n) pour la transmission d'informations, lequel médium relie les unités terminales de réseau (NT1 ... n) à une unité de contrôle de réseau (OLT), des ressources partielles (tr1 ... k) orientées multiplexage par répartition dans le temps avec au moins un critère étant attribuées aux unités terminales de réseau (NT1 ... n) par l'unité de contrôle d'accès (ZSE) et
- une file d'attente (CBR, VBR, UBR) étant prévue pour chaque critère une file d'attente (CBR, VBR, UBR) affectée à l'unité centrale de contrôle d'accès (ZWE) étant prévue pour chaque critère et
- l'unité de contrôle d'accès étant configurée de manière telle que
-- des autorisations d'accès (zb1, 2) des unités terminales de réseau (NT1 .... n) au médium de transmission commun (VL1 ... n) sont générées centralement en fonction de l'au moins un critère des ressources partielles (tr1 ... k) respectivement attribuées, et affectées à la file d'attente (CBR, VBR, UBR) correspondante avec le critère correspondant individuel à la file d'attente,
-- l'accès aux ressources partielles (tr1 ... k) correspondantes est octroyé conformément aux autorisations d'accès (zb1, 2) associées par traitement cyclique des files d'attente (CBR, VBR, UBR).

10. Méthode selon la revendication 9,
**caractérisée en ce que**
l'unité de contrôle d'accès (ZSE) est affectée à l'unité de contrôle de réseau (OLT).
